# EUROPEAN PATENT APPLICATION

(11) **EP 4 836 563 A1**
(43) Date of publication of application: **04.11.2026**
(21) Application number: 24916747.9
(22) Date of filing: 26.12.2024
(51) Int. Cl.: H04W 72/0457

(54) **COMMUNICATION METHOD, APPARATUS AND SYSTEM**

(30) Priority: 12.01.2024 CN 202410054074
(71) Applicant: Huawei Technologies Co., Ltd., Shenzhen, Guangdong 518129 (CN)
(72) Inventor: LI, Kexin, Shenzhen, Guangdong 518129 (CN); KONG, Chuili, Shenzhen, Guangdong 518129 (CN); YU, Tianhang, Shenzhen, Guangdong 518129 (CN); LUO, Hejia, Shenzhen, Guangdong 518129 (CN); BI, Xiaoyan, Shenzhen, Guangdong 518129 (CN)
(74) Representative: Thun, Clemens
(86) International application number: PCT/CN2024/142746
(87) International publication number: WO 2025/148700

(57) **Abstract**

This application relates to a communication method, an apparatus, and a system. A first network device generates first rate matching information of a downlink data channel from the first network device to a terminal, where the first rate matching information is determined based on attribute information of a resource occupied by an SSB that is sent by a second network device to the terminal, a delay difference, and a frequency shift difference, the delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource. The first network device sends first information to the terminal, where the first information indicates the first rate matching information. In embodiments of this application, the first network device sends downlink data to the terminal based on the first rate matching information, thereby effectively avoiding mutual interference generated when the second network device sends the SSB to the terminal and the first network device sends the downlink data to the terminal, and improving communication quality.

## Description

### CROSS-REFERENCE TO RELATED APPLICATIONS

This application claims priority to Chinese Patent Application No. 202410054074.7, filed with the China National Intellectual Property Administration on January 12, 2024 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, an apparatus, and a system.

### BACKGROUND

In a mobile communication system, a network device periodically sends a synchronization signal block (synchronization signal block, SSB), so that a terminal achieves downlink synchronization with the network device after receiving the SSB. However, when the terminal may receive SSBs sent by different network devices, downlink data sent by one network device on a physical downlink shared channel (physical downlink shared channel, PDSCH) may cause interference to an SSB sent by another network device.

For example, on a same time-frequency resource, if a first network device sends an SSB to the terminal, and a second network device sends downlink data to the terminal on the PDSCH, when receiving the SSB from the first network device, the terminal is interfered with by the downlink data from the second network device. Consequently, the terminal cannot accurately obtain the SSB sent by the first network device, thereby failing to effectively ensure communication quality.

### SUMMARY

Embodiments of this application provide a communication method, an apparatus, and a system, to avoid mutual interference generated when different network devices send an SSB and downlink data, to improve communication quality.

According to a first aspect, a communication method is provided. The method may be performed by a first network device, or may be performed by another device including a function of the first network device, or may be performed by a chip system (or a chip) or another functional module. The chip system or the functional module can implement the function of the first network device. The chip system or the functional module is, for example, disposed in the first network device. In the following descriptions, an example in which the method is performed by the first network device is used. The method includes: generating first rate matching information of a downlink data channel from the first network device to a terminal, where the first rate matching information is determined based on attribute information of a resource occupied by an SSB that is sent by a second network device to the terminal, a delay difference, and a frequency shift difference, the delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource; and sending first information to the terminal, where the first information indicates the first rate matching information.

In this embodiment of this application, the first network device may generate the first rate matching information based on the attribute information of the resource occupied by the SSB that is sent by the second network device to the terminal, the time difference between receiving, by the terminal, the downlink signals sent by the first network device and the second network device on the same time domain resource, and the frequency offset difference between receiving, by the terminal, the downlink signals sent by the first network device and the second network device on the same frequency domain resource. In this way, the first network device may send downlink data to the terminal based on the first rate matching information, so that when the second network device sends the SSB to the terminal, the first network device does not send downlink data to the terminal, thereby effectively avoiding mutual interference generated when the second network device sends the SSB and the first network device sends the downlink data, and improving communication quality between the first network device, the terminal, and the second network device to some extent.

In addition, because the first network device sends, to the terminal, the first information indicating the first rate matching information, the terminal can accurately receive, based on the first rate matching information, the downlink data sent by the first network device on the downlink data channel.

In an optional implementation, the method may further include: receiving second information of the terminal, where the second information indicates the delay difference and the frequency shift difference. Because the first network device may directly obtain the delay difference and the frequency shift difference from the terminal, in other words, the first network device may obtain the delay difference and the frequency shift difference without performing calculation or measurement by the first network device, computational complexity of generating the first rate matching information by the first network device is reduced.

In another optional implementation, the method may further include: receiving third information of the terminal, where the third information indicates location information and/or movement trajectory information of the terminal, and the delay difference and the frequency shift difference are determined by the first network device based on the location information and/or the movement trajectory information of the terminal and ephemeris information within specified duration. In this case, the delay difference and the frequency shift difference are no longer obtained by the terminal through measurement, but are determined by the first network device. Therefore, implementation on a terminal side is simple (to be specific, the delay difference and the frequency shift difference do not need to be measured), and signaling overheads between the terminal and the first network device are reduced. In addition, because the terminal reports the location information and/or the movement trajectory information of the terminal, after obtaining the location information and/or the movement trajectory information of the terminal, the first network device may determine, in advance, a delay difference and a frequency shift difference of the terminal in a future time range with reference to the ephemeris information (to be specific, ephemeris information of the first network device and/or ephemeris information of the second network device), thereby improving efficiency of subsequently generating the first rate matching information.

In an optional implementation, the delay difference is less than or equal to a length of a cyclic prefix (cyclic prefix, CP), the frequency shift difference is less than a first threshold, the first rate matching information may be second rate matching information, and the second rate matching information may be determined based on the attribute information of the resource occupied by the SSB that is sent by the second network device to the terminal.

In another optional implementation, the delay difference is greater than the length of the CP, the frequency shift difference is less than the first threshold, the first rate matching information may be determined based on the second rate matching information and a first time domain offset, and the first time domain offset is related to the delay difference.

In another optional implementation, the delay difference is less than or equal to the length of the CP, the frequency shift difference is greater than a second threshold, the first rate matching information may be determined based on the second rate matching information and a first frequency domain offset, the first frequency domain offset is related to the frequency shift difference, and the second threshold is greater than the first threshold.

In another optional implementation, the delay difference is greater than the length of the CP, the frequency shift difference is greater than the second threshold, and the first rate matching information may be determined based on the second rate matching information, the first time domain offset, and the first frequency domain offset.

In this implementation, because the first network device determines the first rate matching information based on specific conditions of the delay difference and the frequency shift difference, the first rate matching information generated by the first network device can well adapt to different network environments (to be specific, different delay differences and frequency shift differences), thereby effectively avoiding the mutual interference generated when the first network device sends the SSB on the downlink data channel and the second network device sends the downlink data, and ensuring improvement of the communication quality.

In an optional implementation, the method may further include: sending fourth information to the terminal, where the fourth information indicates the second rate matching information, the second rate matching information is determined based on the attribute information of the resource occupied by the SSB that is sent by the second network device to the terminal, and the first information further indicates to modify the second rate matching information based on the first rate matching information. In this implementation, before the terminal receives the first rate matching information or the first network device generates the first rate matching information, the terminal may receive, based on the second rate matching information indicated by the fourth information, the downlink data sent by the first network device based on the second rate matching information, and the SSB from the second network device, to ensure good quality of communication between the terminal, the first network device, and the second network device, in other words, to mitigate, to some extent, the mutual interference generated when the first network device sends the downlink signal and the second network device sends the SSB.

In an optional implementation, the first rate matching information may include at least one of the following: a start data symbol and a quantity of data symbols, a start data resource block (resource block, RB) and a quantity of data RBs, and a period in which the second network device sends the SSB to the terminal. All of the start data symbol and the quantity of data symbols, the start data RB and the quantity of data RBs, and the period in which the second network device sends the SSB to the terminal may indicate a rate matching resource from the first network device to the downlink data channel. Therefore, if the first rate matching information generated by the first network device includes any one or a combination of the three items, when the first network device sends the downlink data on the downlink data channel based on the first rate matching information, the mutual interference generated when the first network device sends the downlink signal and the second network device sends the SSB can be avoided, and operations such as determining the second rate matching information by the first network device, sending the second rate matching information to the terminal by the first network device, and adjusting or modifying the second rate matching information by the first network device can also be reduced, thereby reducing signaling overheads of the first network device and reducing system resources needed for signaling transmission between the terminal and the first network device.

In an optional implementation, the attribute information of the resource occupied by the SSB that is sent by the second network device to the terminal may include at least one of the following: an index of the SSB sent by the second network device to the terminal, the period in which the second network device sends the SSB to the terminal, and a frequency domain start position and/or a frequency domain center position and/or a frequency domain end position of an RB on which the second network device sends the SSB to the terminal. It can be learned that, because there is a mapping relationship/correspondence between the index of the SSB sent by the second network device to the terminal and a time domain/time position for sending the SSB, the first network device may determine, based on the index of the SSB sent by the second network device to the terminal, the time domain/time position at which the second network device sends the SSB each time. The period in which the second network device sends the SSB to the terminal may be used to determine a time domain range occupied for sending the SSB by the second network device to the terminal, that is, a time interval between two adjacent times of sending the SSB by the second network device to the terminal. For example, the second network device sends an SSB to the terminal every 20 milliseconds (ms). In this case, the first network device may further determine the start data symbol (to be specific, a time domain start position of a resource indicated by the first rate matching information) based on the index of the SSB sent by the second network device to the terminal, the period in which the second network device sends the SSB to the terminal, and the delay difference. In addition, the frequency domain start position and/or the frequency domain center position and/or the frequency domain end position of the RB on which the second network device sends the SSB to the terminal may be used to determine a specific frequency domain position occupied for sending the SSB by the second network device to the terminal. In this case, the first network device may determine the start data RB (to be specific, a frequency domain start position of a resource indicated by the first rate matching information) based on the frequency shift difference and the frequency domain start position and/or the frequency domain center position and/or the frequency domain end position of the RB on which the second network device sends the SSB to the terminal. In other words, the first network device may implement rate matching on a resource of the downlink data channel from the first network device to the terminal based on the attribute information of the resource occupied by the SSB that is sent by the second network device to the terminal, the delay difference and/or a frequency domain difference.

According to a second aspect, another communication method is provided. The method may be performed by a terminal, or may be performed by another device including a function of the terminal, or may be performed by a chip system (or a chip) or another functional module. The chip system or the functional module can implement the function of the terminal. The chip system or the functional module is, for example, disposed in the terminal. In the following descriptions, an example in which the method is performed by the terminal is used. The method includes: receiving first information from a first network device, where the first information indicates first rate matching information of a downlink data channel from the first network device to the terminal, the first rate matching information is determined based on attribute information of a resource occupied by an SSB that is sent by a second network device to the terminal, a delay difference, and a frequency shift difference, the delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource; and receiving, based on the first rate matching information, downlink data sent by the first network device on the downlink data channel.

In an optional implementation, the method may further include: sending second information to the first network device, where the second information indicates the delay difference and the frequency shift difference.

In another optional implementation, the method may further include: sending third information to the first network device, where the third information indicates location information and/or movement trajectory information of the terminal, and the delay difference and the frequency shift difference are determined by the first network device based on the location information and/or the movement trajectory information of the terminal and ephemeris information within specified duration.

In an optional implementation, the delay difference is less than or equal to a length of a CP, the frequency shift difference is less than a first threshold, the first rate matching information is second rate matching information, and the second rate matching information is determined based on the attribute information of the resource occupied by the SSB that is sent by the second network device to the terminal.

In another optional implementation, the delay difference is greater than the length of the CP, the frequency shift difference is less than the first threshold, the first rate matching information is determined based on the second rate matching information and a first time domain offset, and the first time domain offset is related to the delay difference.

In another optional implementation, the delay difference is less than or equal to the length of the CP, the frequency shift difference is greater than a second threshold, the first rate matching information is determined based on the second rate matching information and a first frequency domain offset, the first frequency domain offset is related to the frequency shift difference, and the second threshold is greater than the first threshold.

In another optional implementation, the delay difference is greater than the length of the CP, the frequency shift difference is greater than the second threshold, and the first rate matching information is determined based on the second rate matching information, the first time domain offset, and the first frequency domain offset.

In an optional implementation, the method may further include: receiving fourth information of the first network device, where the fourth information indicates the second rate matching information, the second rate matching information is determined based on the attribute information of the resource occupied by the SSB that is sent by the second network device to the terminal, and the first information further indicates to modify the second rate matching information based on the first rate matching information when the second rate matching information is modified based on the first rate matching information.

In an optional implementation, the first rate matching information may include at least one of the following: a start data symbol and a quantity of data symbols, a start data RB and a quantity of data RBs, and a period in which the second network device sends the SSB to the terminal.

In an optional implementation, the attribute information of the resource occupied by the SSB that is sent by the second network device to the terminal may include at least one of the following: an index of the SSB sent by the second network device to the terminal, the period in which the second network device sends the SSB to the terminal, and a frequency domain start position and/or a frequency domain center position and/or a frequency domain end position of an RB on which the second network device sends the SSB to the terminal.

According to a third aspect, another communication method is provided. The method may be performed by a second network device, or may be performed by another device including a function of the second network device, or may be performed by a chip system (or a chip) or another functional module. The chip system or the functional module can implement the function of the second network device. The chip system or the functional module is, for example, disposed in the second network device. In the following descriptions, an example in which the method is performed by the second network device is used. The method includes: sending, to a first network device, attribute information of a resource occupied by an SSB that is sent by the second network device to a terminal, to cause the first network device to send first information to the terminal, where the first information indicates first rate matching information of a downlink data channel from the first network device to the terminal, the first rate matching information is determined based on the attribute information in combination with a delay difference and a frequency shift difference, the delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource; and sending the SSB to the terminal based on the attribute information of the resource occupied by the SSB.

In an optional implementation, the delay difference is less than or equal to a length of a CP, the frequency shift difference is less than a first threshold, the first rate matching information is second rate matching information, and the second rate matching information is determined based on the attribute information of the resource occupied by the SSB that is sent by the second network device to the terminal.

In another optional implementation, the delay difference is greater than the length of the CP, the frequency shift difference is less than the first threshold, the first rate matching information is determined based on the second rate matching information and a first time domain offset, and the first time domain offset is related to the delay difference.

In another optional implementation, the delay difference is less than or equal to the length of the CP, the frequency shift difference is greater than a second threshold, the first rate matching information is determined based on the second rate matching information and a first frequency domain offset, the first frequency domain offset is related to the frequency shift difference, and the second threshold is greater than the first threshold.

In another optional implementation, the delay difference is greater than the length of the CP, the frequency shift difference is greater than the second threshold, and the first rate matching information is determined based on the second rate matching information, the first time domain offset, and the first frequency domain offset.

In an optional implementation, the first rate matching information may include at least one of the following: a start data symbol and a quantity of data symbols, a start data RB and a quantity of data RBs, and a period in which the second network device sends the SSB to the terminal.

In an optional implementation, the attribute information of the resource occupied by the SSB that is sent by the second network device to the terminal may include at least one of the following: an index of the SSB sent by the second network device to the terminal, the period in which the second network device sends the SSB to the terminal, and a frequency domain start position and/or a frequency domain center position and/or a frequency domain end position of an RB on which the second network device sends the SSB to the terminal.

According to a fourth aspect, a communication apparatus is provided. The communication apparatus may be the first network device according to the first aspect. Alternatively, the communication apparatus may be another entity having a function of the first network device. For example, the communication apparatus is another device having the function of the first network device, or is a chip system (or a chip) or another functional module. The chip system or the functional module can implement the function of the first network device. The chip system or the functional module is, for example, disposed in the first network device. In an optional implementation, the communication apparatus includes a radio frequency apparatus and a baseband apparatus. In another optional implementation, the communication apparatus includes a transceiver unit (sometimes also referred to as a transceiver module) and a processing unit (sometimes also referred to as a processing module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit (or the processing module) is configured to generate first rate matching information of a downlink data channel from the first network device to a terminal, where the first rate matching information is determined by the processing unit (or the processing module) based on attribute information of a resource occupied by an SSB that is sent by a second network device to the terminal, a delay difference, and a frequency shift difference, the delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource; and the transceiver unit (or the sending unit) is configured to send first information to the terminal, where the first information indicates the first rate matching information.

In an optional implementation, the transceiver unit (or the receiving unit) is configured to receive second information of the terminal, where the second information indicates the delay difference and the frequency shift difference.

In another optional implementation, the transceiver unit (or the receiving unit) is configured to receive third information of the terminal, where the third information indicates location information and/or movement trajectory information of the terminal, and the delay difference and the frequency shift difference are determined by the processing unit (or the processing module) based on the location information and/or the movement trajectory information of the terminal and ephemeris information within specified duration.

In an optional implementation, the delay difference is less than or equal to a length of a CP, the frequency shift difference is less than a first threshold, the first rate matching information is second rate matching information, and the second rate matching information is determined by the processing unit (or the processing module) based on the attribute information of the resource occupied by the SSB that is sent by the second network device to the terminal.

In another optional implementation, the delay difference is greater than the length of the CP, the frequency shift difference is less than the first threshold, the first rate matching information is determined by the processing unit (or the processing module) based on the second rate matching information and a first time domain offset, and the first time domain offset is related to the delay difference.

In another optional implementation, the delay difference is less than or equal to the length of the CP, the frequency shift difference is greater than a second threshold, the first rate matching information is determined by the processing unit (or the processing module) based on the second rate matching information and a first frequency domain offset, the first frequency domain offset is related to the frequency shift difference, and the second threshold is greater than the first threshold.

In another optional implementation, the delay difference is greater than the length of the CP, the frequency shift difference is greater than the second threshold, and the first rate matching information is determined by the processing unit (or the processing module) based on the second rate matching information, the first time domain offset, and the first frequency domain offset.

In an optional implementation, the transceiver unit (or the sending unit) is configured to send fourth information to the terminal, where the fourth information indicates the second rate matching information, the second rate matching information is determined by the processing unit (or the processing module) based on the attribute information of the resource occupied by the SSB that is sent by the second network device to the terminal, and the first information further indicates to modify the second rate matching information based on the first rate matching information.

In an optional implementation, the communication apparatus further includes a storage unit (sometimes also referred to as a storage module), and the processing unit is configured to: be coupled to the storage unit, and execute a program or instructions in the storage unit, so that the processing unit can control or use the transceiver unit to perform the method in the first aspect.

According to a fifth aspect, a communication apparatus is provided. The communication apparatus may be the terminal according to the second aspect. The communication apparatus may further include another entity having a function of the terminal. For example, the communication apparatus is another device having the function of the terminal, or is a chip system (or a chip) or another functional module. The chip system or the functional module can implement the function of the terminal. The chip system or the functional module is, for example, disposed in the terminal. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the fourth aspect.

In an optional implementation, the transceiver unit (or the receiving unit) is configured to receive first information from a first network device, where the first information indicates first rate matching information of a downlink data channel from the first network device to the terminal, the first rate matching information is determined by the processing unit (or the processing module) based on attribute information of a resource occupied by an SSB that is sent by a second network device to the terminal, a delay difference, and a frequency shift difference, the delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource; and the transceiver unit (or the receiving unit) is configured to receive, based on the first rate matching information, downlink data sent by the first network device on the downlink data channel.

In an optional implementation, the transceiver unit (or the sending unit) is configured to send second information to the first network device, where the second information indicates the delay difference and the frequency shift difference.

In an optional implementation, the transceiver unit (or the sending unit) is configured to send third information to the first network device, where the third information indicates location information and/or movement trajectory information of the terminal, and the delay difference and the frequency shift difference are determined by the processing unit (or the processing module) based on the location information and/or the movement trajectory information of the terminal and ephemeris information within specified duration.

In an optional implementation, the delay difference is less than or equal to a length of a CP, the frequency shift difference is less than a first threshold, the first rate matching information is second rate matching information, and the second rate matching information is determined by the processing unit (or the processing module) based on the attribute information of the resource occupied by the SSB that is sent by the second network device to the terminal.

In another optional implementation, the delay difference is greater than the length of the CP, the frequency shift difference is less than the first threshold, the first rate matching information is determined by the processing unit (or the processing module) based on the second rate matching information and a first time domain offset, and the first time domain offset is related to the delay difference.

In another optional implementation, the delay difference is less than or equal to the length of the CP, the frequency shift difference is greater than a second threshold, the first rate matching information is determined by the processing unit (or the processing module) based on the second rate matching information and a first frequency domain offset, the first frequency domain offset is related to the frequency shift difference, and the second threshold is greater than the first threshold.

In another optional implementation, the delay difference is greater than the length of the CP, the frequency shift difference is greater than the second threshold, and the first rate matching information is determined by the processing unit (or the processing module) based on the second rate matching information, the first time domain offset, and the first frequency domain offset.

In an optional implementation, the transceiver unit (or the receiving unit) is configured to receive fourth information of the first network device, where the fourth information indicates the second rate matching information, the second rate matching information is determined by the processing unit (or the processing module) based on the attribute information of the resource occupied by the SSB that is sent by the second network device to the terminal, and the first information further indicates the processing unit (or the processing module) to modify the second rate matching information based on the first rate matching information when the second rate matching information is modified based on the first rate matching information.

In an optional implementation, the communication apparatus further includes a storage unit (sometimes also referred to as a storage module), and the processing unit is configured to: be coupled to the storage unit, and execute a program or instructions in the storage unit, so that the processing unit can control or use the transceiver unit to perform the method in the second aspect.

According to a sixth aspect, a communication apparatus is provided. The communication apparatus may be the second network device according to the third aspect. The communication apparatus may further include another entity having a function of the second network device. For example, the communication apparatus is another device having the function of the second network device, or is a chip system (or a chip) or another functional module. The chip system or the functional module can implement the function of the second network device. The chip system or the functional module is, for example, disposed in the second network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the fourth aspect.

In an optional implementation, the transceiver unit (or the sending unit) is configured to send, to a first network device, attribute information of a resource occupied by an SSB that is sent by the second network device to a terminal, to cause the first network device to send first information to the terminal, where the first information indicates first rate matching information of a downlink data channel from the first network device to the terminal, the first rate matching information is determined by the processing unit (or the processing module) based on the attribute information in combination with a delay difference and a frequency shift difference, the delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource; and the transceiver unit (or the sending unit) is configured to send the SSB to the terminal based on the attribute information of the resource occupied by the SSB.

In an optional implementation, the delay difference is less than or equal to a length of a CP, the frequency shift difference is less than a first threshold, the first rate matching information is second rate matching information, and the second rate matching information is determined by the processing unit (or the processing module) based on the attribute information of the resource occupied by the SSB that is sent by the second network device to the terminal.

In another optional implementation, the delay difference is greater than the length of the CP, the frequency shift difference is less than the first threshold, the first rate matching information is determined by the processing unit (or the processing module) based on the second rate matching information and a first time domain offset, and the first time domain offset is related to the delay difference.

In another optional implementation, the delay difference is less than or equal to the length of the CP, the frequency shift difference is greater than a second threshold, the first rate matching information is determined by the processing unit (or the processing module) based on the second rate matching information and a first frequency domain offset, the first frequency domain offset is related to the frequency shift difference, and the second threshold is greater than the first threshold.

In another optional implementation, the delay difference is greater than the length of the CP, the frequency shift difference is greater than the second threshold, and the first rate matching information is determined by the processing unit (or the processing module) based on the second rate matching information, the first time domain offset, and the first frequency domain offset.

In an optional implementation, the communication apparatus further includes a storage unit (sometimes also referred to as a storage module), and the processing unit is configured to: be coupled to the storage unit, and execute a program or instructions in the storage unit, so that the processing unit can control or use the transceiver unit to perform the method in the third aspect.

According to a seventh aspect, a communication apparatus is provided. The communication apparatus may be a first network device, or a chip or a chip system used in the first network device. The communication apparatus includes a communication interface and a processor, and optionally, further includes a memory. The memory is configured to store a computer program, and the processor is coupled to the memory and the communication interface. When the processor reads the computer program or instructions through the communication interface, the communication apparatus is caused to perform the method performed by the first network device in the first aspect.

According to an eighth aspect, a communication apparatus is provided. The communication apparatus may be a terminal, or a chip or a chip system used in the terminal. The communication apparatus includes a communication interface and a processor, and optionally, further includes a memory. The memory is configured to store a computer program, and the processor is coupled to the memory and the communication interface. When the processor reads the computer program or instructions through the communication interface, the communication apparatus is caused to perform the method performed by the terminal in the second aspect.

According to a ninth aspect, a communication apparatus is provided. The communication apparatus may be a second network device, or a chip or a chip system used in the second network device. The communication apparatus includes a communication interface and a processor, and optionally, further includes a memory. The memory is configured to store a computer program, and the processor is coupled to the memory and the communication interface. When the processor reads the computer program or instructions through the communication interface, the communication apparatus is caused to perform the method performed by the second network device in the third aspect.

According to a tenth aspect, a computer-readable storage medium is provided. The computer-readable storage medium is configured to store a computer program or instructions, and when the computer program or the instructions are run, the method performed by the first network device and/or the terminal and/or the second network device in each aspect in the first aspect to the third aspect is implemented.

According to an eleventh aspect, a computer program product including instructions is provided. When a computer program or the instructions are run on a computer, the method in each aspect in the first aspect to the third aspect is implemented.

According to a twelfth aspect, a chip system is provided, including a processor and an interface. The processor is configured to invoke instructions from the interface and run the instructions, to cause the chip system to implement the method in each aspect in the first aspect to the third aspect.

For technical effects that can be achieved by each aspect in the second aspect to the twelfth aspect and each possible implementation solution of each aspect, refer to descriptions of effects that can be achieved by each corresponding possible design solution in the first aspect. No repeated description is provided.

### BRIEF DESCRIPTION OF DRAWINGS

FIG. 1 is a diagram of an architecture of a non-terrestrial network (non-terrestrial network, NTN) (transparent transmission mode) according to an embodiment of this application;
FIG. 2 is a diagram of an architecture of another NTN (regenerative mode) according to an embodiment of this application;
FIG. 3 is a diagram of an architecture of still another NTN according to an embodiment of this application;
FIG. 4 is a diagram of an architecture of still another NTN according to an embodiment of this application;
FIG. 5 is a diagram of a structure of an SSB according to an embodiment of this application;
FIG. 6 is a diagram of a scenario in which a first satellite and a second satellite have an overlapping coverage area according to an embodiment of this application;
FIG. 7 is a flowchart of a communication method according to an embodiment of this application;
FIG. 8 is a diagram of a structure of a communication apparatus according to an embodiment of this application; and
FIG. 9 is a diagram of another apparatus according to an embodiment of this application.

### DESCRIPTION OF EMBODIMENTS

The communication method provided in embodiments of this application may be applied to various mobile communication systems. In other words, a specific type of a mobile communication system is not limited in embodiments of this application. For example, the mobile communication system may be a 4th generation mobile communication technology (4th generation, 4G) system, for example, a long term evolution (long term evolution, LTE) system, or may be a 5th generation mobile communication technology (5th generation, 5G) system, for example, a 5G new radio (new radio, NR) system, or may be a future communication network or a new communication system emerging in future communication development. Alternatively, the communication system may be an NTN, a machine to machine (machine to machine, M2M) network, a machine type communication (machine type communication, MTC) network, or another network.

In a possible application scenario, the NTN system may include a satellite communication system. Based on satellite altitudes, namely, satellite orbital heights, a satellite may be classified into a highly elliptical orbit (highly elliptical orbit, HEO) satellite, a geostationary earth orbit (geosynchronous earth orbit, GEO) satellite, a medium earth orbit (medium earth orbit, MEO) satellite, and a low earth orbit (low earth orbit, LEO) satellite. Optionally, the NTN system may further include an aerial network device, for example, a high altitude platform station (high altitude platform station, HAPS) communication system. The aerial network device in this application is not limited to the foregoing examples.

To make objectives, technical solution, and advantages of embodiments of this application clearer, the following further describes embodiments of this application in detail with reference to the accompanying drawings. In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c may represent: a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, an order, a time sequence, priorities, importance, or the like of the plurality of objects. For example, first information and second information may be same information, or may be different information. In addition, the names do not indicate that the two pieces of information are different in transmitting ends/receiving ends, formats, content, sizes, application scenarios, priorities, importance, or the like. For another example, a first network device and a second network device may be a same network device, or may be different network devices, and the names do not indicate that priorities, importance, or the like of the two network devices are different. In addition, step numbers in embodiments described in this application are merely for distinguishing between different steps in some cases, but are not for limiting a sequence of the steps.

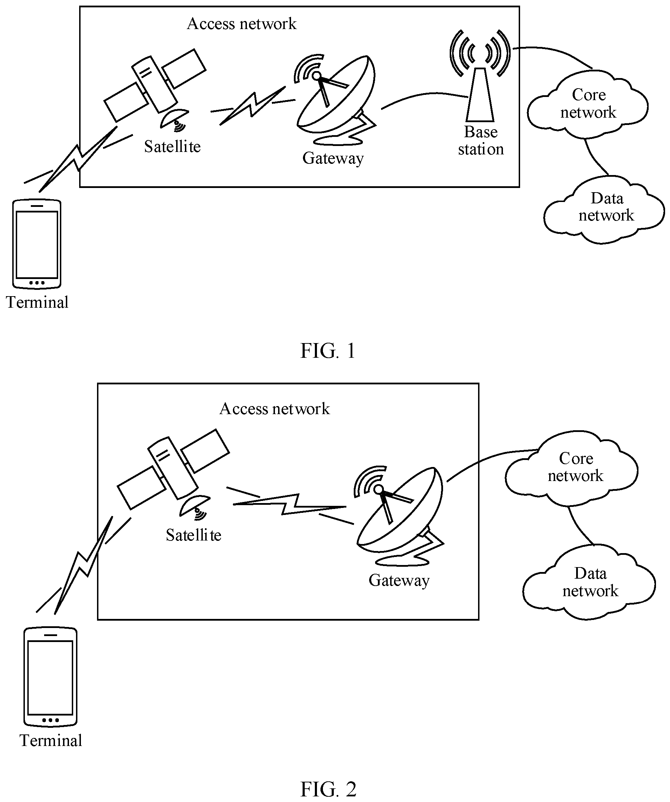

FIG. 1 is a diagram of an architecture of an NTN according to an embodiment of this application. The NTN includes a non-terrestrial network device, a terminal, a gateway, a terrestrial base station, a (terrestrial) core network, and a data network. The non-terrestrial network device may be a satellite, for example, may be a HEO satellite, a GEO satellite, a MEO satellite, or a LEO satellite. Alternatively, the non-terrestrial network device may be a HAPS or the like. This is not limited herein. In this embodiment of this application, an example in which the non-terrestrial network device is the satellite is used for description. However, in this application, the satellite may alternatively be replaced with another non-terrestrial network device (for example, the HAPS). The gateway (or referred to as a ground station, an earth station, a signal gateway station, or a gateway station) (gateway, GW) may be used to connect the satellite to the terrestrial base station. For example, one or more satellites may be connected to one or more terrestrial base stations via one or more gateways. This is not limited herein.

In addition, a communication mode of the satellite in FIG. 1 is a transparent transmission (transparent transmission) mode. To be specific, the satellite serves as an analog radio frequency repeater to implement radio frequency conversion and amplification, and may transparently transmit or replicate a signal between the terrestrial base station and the terminal. That is, the satellite has only a signal forwarding function. For example, signals sent by the terminal may be transparently transmitted by the satellite and forwarded by the gateway to the terrestrial base station.

The communication mode of the satellite is not limited in this embodiment of this application. For example, the communication mode of the satellite may alternatively be a regenerative (regenerative) mode. FIG. 2 is a diagram of an architecture of another NTN according to an embodiment of this application. In FIG. 2, a communication mode of a satellite is the regenerative mode. To be specific, the satellite may serve as a base station for wireless communication, to regenerate signals received from the ground, and may parse (or understand) and process the signals. That is, the satellite has a signal processing capability. For example, the satellite may be a base station carried on an artificial earth satellite or a high altitude aircraft. In this case, a gateway may forward signaling between the satellite (namely, the base station) and a core network.

It should be noted that, although FIG. 1 and FIG. 2 show only one satellite, one gateway, and one terminal, a quantity of the foregoing communication devices (for example, the satellites, the gateways, or the terminals) is not limited in this embodiment of this application. In other words, in an actual scenario, an architecture in which a plurality of satellites and/or a plurality of gateways cooperate may be used based on a communication requirement. Each satellite may provide a service for one or more terminals, and each gateway may correspond to one or more satellites. Similarly, each satellite may also correspond to one or more gateways. This is not specifically limited in this embodiment of this application.

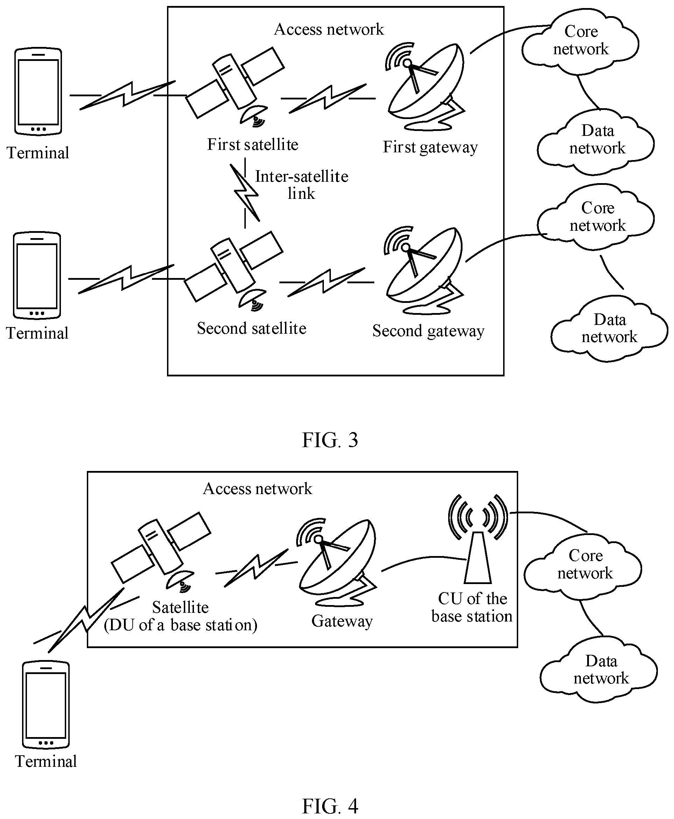

Accordingly, FIG. 3 is a diagram of an architecture of still another NTN according to an embodiment of this application. In the NTN shown in FIG. 3, an example in which the NTN includes two satellites (a first satellite and a second satellite) and two gateways (a first gateway and a second gateway) is used. A communication mode of the two satellites is a regenerative mode. That is, both the two satellites may serve as base stations for wireless communication. In addition, there is an inter-satellite link (inter-satellite link, ISL) between the two satellites. In this network architecture, different satellites may communicate with each other, or may be connected to a same (terrestrial) core network.

Optionally, the satellite may alternatively serve as a distributed unit (distributed unit, DU) of the base station, and is separated from a central unit (central unit, CU) of a terrestrial base station, to form a CU-DU distributed architecture. For example, FIG. 4 is a diagram of an architecture of yet another NTN according to an embodiment of this application. A difference between FIG. 4 and FIG. 1 lies in that the satellite, serving as the DU of the base station, may understand, process, and regenerate a signal from the terrestrial base station rather than merely transparently transmit or replicate the signal from the terrestrial base station, while the terrestrial base station serves only as the CU.

It should be noted that, in this network architecture, a service link (or referred to as a user link) (service link) between the terminal and the satellite may be used to transmit an air interface signal (for example, a Uu interface signal), a feeder link (or referred to as a feedback circuit) (feeder link) between the satellite and the gateway may be used to transmit a satellite radio interface (satellite radio interface, SRI) signal, and a midhaul interface signal (for example, an F1 interface signal) between the DU and the CU may be transmitted over the SRI signal.

The network device in embodiments of this application includes, for example, a non-terrestrial network device like a satellite, or a terrestrial access network (access network, AN) device including but not limited to a base station. The network device is an access device that is used by the terminal to access a mobile communication system in a wireless manner. The network device may alternatively be a device that communicates with the terminal through an air interface. For example, the access network device in this application may include an evolved NodeB (evolved NodeB, eNodeB)/eNB in an LTE system or a long term evolution-advanced (long term evolution-advanced, LTE-A) system, a next generation NodeB (next generation NodeB, gNB) in a 5G system, an access node in a wireless fidelity (wireless fidelity, Wi-Fi) system, or the like. Alternatively, the network device may be a relay station, a vehicle-mounted device, a future evolved public land mobile network (Public Land Mobile Network, PLMN) device, a device in an M2M network, a device in an internet of things (internet of things, IoT), an uncrewed aerial vehicle device, or the like. An access network device in a vehicle to everything (vehicle to everything, V2X) system may be a road side unit (road side unit, RSU). Neither of a specific technology and a specific device form used by the network device is limited in embodiments of this application.

In addition, the base station in embodiments of this application may include a CU and a DU, and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that such protocol layer division is merely an example, and division may alternatively be performed at another protocol layer. A radio frequency apparatus may be remotely deployed and not placed in the DU, or may be integrated into the DU, or may be partially remotely disposed and partially integrated into the DU. This is not limited in embodiments of this application. In addition, in some embodiments, a control plane (control plane, CP) and a user plane (user plane, UP) of the CU may be further separated into different entities for implementation, where the entities are respectively a control-plane CU entity (CU-CP entity) and a user-plane CU entity (CU-UP entity). The control plane CU-CP of the CU may be further divided into a CU-CP 1 and a CU-CP 2. The CU-CP 1 includes various radio resource management functions, and the CU-CP 2 includes a radio resource control (radio resource control, RRC) function and a PDCP-C function (namely, a basic function of control plane signaling at the PDCP layer). In this network architecture, signaling generated by the CU may be sent to the terminal via the DU, or signaling generated by the terminal may be sent to the CU via the DU. The DU may transparently transmit the signaling to the terminal or the CU by directly encapsulating the signaling at a protocol layer without parsing the signaling.

It should be further noted that, when an example in which the network device is a base station is used, the base station may communicate with the terminal, or may communicate with the terminal via a relay station; and in addition, the terminal may communicate with a plurality of base stations in different access technologies. For example, the network device is a satellite. The satellite may be connected to the base station via a gateway. If a communication mode of the satellite is a transparent transmission mode, signals sent by the terminal may be transparently transmitted by the satellite and forwarded by the gateway to a terrestrial base station. If a communication mode of the satellite is a regenerative mode, the satellite may serve as a base station to process signals sent by the terminal.

In embodiments of this application, a communication apparatus configured to implement a function of the network device may be a network device, or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus configured to implement the function of the network device is the network device.

The terminal in embodiments of this application is a device having a wireless transceiver function (which may send a signal to the network device or receive the signal from a network device), and may be a fixed device, a mobile device, a handheld device (for example, a mobile phone), a wearable device, a vehicle-mounted device, or a wireless apparatus (for example, a communication module, a modem, or a chip system) built in the foregoing device. The terminal is configured to connect people, things, machines, and the like, and may be widely used in various scenarios, for example, including but not limited to the following scenarios: a sensing scenario, cellular communication, device-to-device (device-to-device, D2D) communication, V2X, M2M/MTC, an IoT, virtual reality (virtual reality, VR), augmented reality (augmented reality, AR), industrial control (industrial control), self driving (self driving), remote medical (remote medical), a smart grid (smart grid), smart furniture, a smart office, a smart wearable, smart transportation, a smart city (smart city), an uncrewed aerial vehicle, a robot, and indoor commercial scenarios (such as mobile phone projection, file sharing, and video transmission from a mobile phone to VR glasses).

The terminal may also be referred to as a V2X device when used in V2X, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal may be a device, for example, an electricity meter or a water meter, in the D2D communication. In addition, in embodiments of this application, the terminal may alternatively be a terminal in an IoT system. The IoT is an important component of future information technology development. A main technical feature of the IoT is that an object is connected to a network by using a communication technology, to implement an intelligent network of human-computer interconnection and object-object interconnection.

If the various terminals described above are located in a vehicle (for example, placed in the vehicle or mounted in the vehicle), the terminals may be all considered as vehicle-mounted terminals. For example, the vehicle-mounted terminal is also referred to as an on-board unit (on-board unit, OBU). The terminal in this application may alternatively be a vehicle-mounted module, a vehicle-mounted assembly, a vehicle-mounted component, a vehicle-mounted chip, or a vehicle-mounted unit that is disposed in a vehicle as one or more components or units. The vehicle may implement the method in this application through the vehicle-mounted module, the vehicle-mounted assembly, the vehicle-mounted component, the vehicle-mounted chip, or the vehicle-mounted unit that is disposed in the vehicle.

The terminal may be sometimes referred to as user equipment (user equipment, UE), a terminal device, an access station, a UE station, a remote station, a wireless communication device, a user apparatus, or the like.

In embodiments of this application, a communication apparatus configured to implement a function of the terminal may be a terminal; or may be a communication apparatus, for example, a chip system, that can support the terminal in implementing the function. The communication apparatus may be mounted in the terminal. In the technical solutions provided in embodiments of this application, the technical solutions provided in embodiments of this application are described by using an example in which the communication apparatus configured to implement the function of the terminal is the terminal.

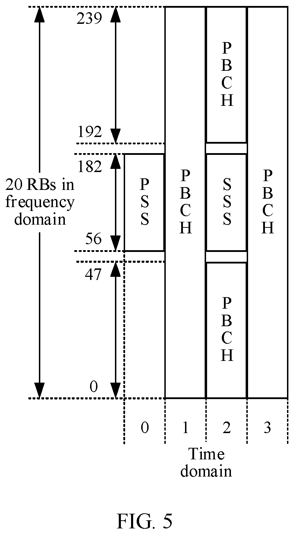

Currently, in a mobile communication system, a network device (for example, a satellite or a base station) periodically sends an SSB, so that a terminal achieves downlink synchronization with the network device after receiving the SSB, to obtain a system message (system information, SI). For example, refer to FIG. 5. The SSB includes a primary synchronization signal (primary synchronization signal, PSS), a secondary synchronization signal (secondary synchronization signal, SSS), and a physical common channel (physical broadcast channel, PBCH). As shown in FIG. 5, the SSB occupies four orthogonal frequency division multiplexing (orthogonal frequency division multiplexing, OFDM) symbols in time domain, and occupies 20 RBs in frequency domain, that is, 240 subcarriers. Optionally, to facilitate beam management of the network device, the ground may be divided into a plurality of grids, and geographical locations of these grids are fixed. Each grid is referred to as a beam position, and may represent a location that is on the ground and to which a beam may point. In this way, when a beam of the network device points to a specific beam position, a corresponding SSB may be sent to the beam position based on a preset correspondence between the beam position and the SSB. It should be noted that types of SSBs are usually limited. For example, there may be eight types of SSBs, namely, an SSB 0 to an SSB 7.

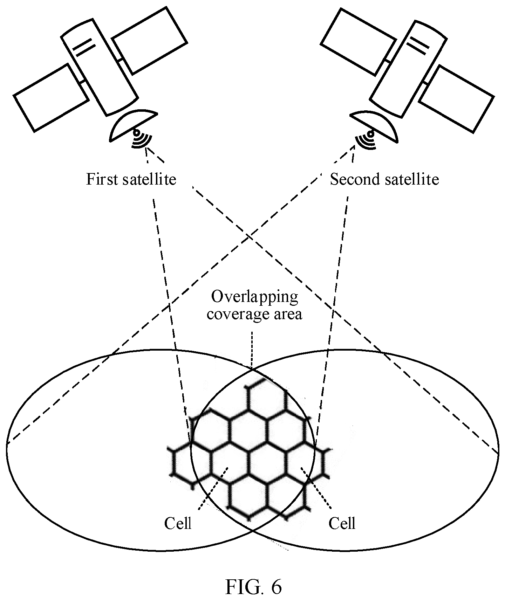

Further, because different network devices (for example, a first network device and a second network device) usually have an overlapping coverage area, a terminal in the overlapping coverage area may receive SSBs sent by the different network devices. Refer to FIG. 6. An example in which the first network device is a first satellite and the second network device is a second satellite is used. The first satellite and the second satellite have an overlapping coverage area (that is, an overlapping area in FIG. 6, where there is at least one cell in the overlapping area). In this way, assuming that the first satellite and the second satellite are synchronous to provide services for a specific cell in the overlapping coverage area, the first satellite may send an SSB (for example, an SSB 0) and downlink data to UE in the cell, and the second satellite may also send an SSB (for example, an SSB 1) and downlink data to the UE in the cell, so that the UE in the cell may receive the SSBs and the downlink data that are respectively sent by the first satellite and the second satellite.

However, when the terminal (for example, the UE) may receive the SSBs and downlink data sent by the different network devices, downlink data sent by one network device to the terminal on a PDSCH may cause interference to an SSB sent by another network device to the terminal. For example, on a same time-frequency resource, if the first network device sends an SSB to the terminal, and the second network device sends downlink data to the terminal on the PDSCH, when receiving the SSB from the first network device, the terminal is interfered with by the downlink data from the second network device. Consequently, the terminal cannot accurately obtain the SSB sent by the first network device, thereby failing to adequately ensure communication quality.

In view of this, in embodiments of this application, the first network device may generate first rate matching information of a downlink data channel (for example, the PDSCH) from the first network device to the terminal based on attribute information of a resource occupied by an SSB that is sent by the second network device to the terminal, a time difference (that is, a delay difference) between receiving, by the terminal, downlink signals sent by the first network device and the second network device on a same time domain resource, and a frequency offset difference (that is, the frequency offset difference) between receiving, by the terminal, downlink signals sent by the first network device and the second network device on a same frequency domain resource. The rate matching information is a (time-frequency) resource that is not allowed to be used by the network device when the first network device and the terminal use the downlink data channel for communication, and the rate matching information may also be referred to as a rate matching resource. Optionally, the downlink signal includes downlink signaling or downlink data sent by the first network device or the second network device to the terminal. This is not limited in this application. In this way, it can be avoided that the first network device does not send a downlink signal (for example, the downlink data) to the terminal when the second network device sends a downlink signal (for example, the SSB) to the terminal. Therefore, mutual interference generated when different network devices send the SSB and the downlink data is avoided, and communication quality is improved.

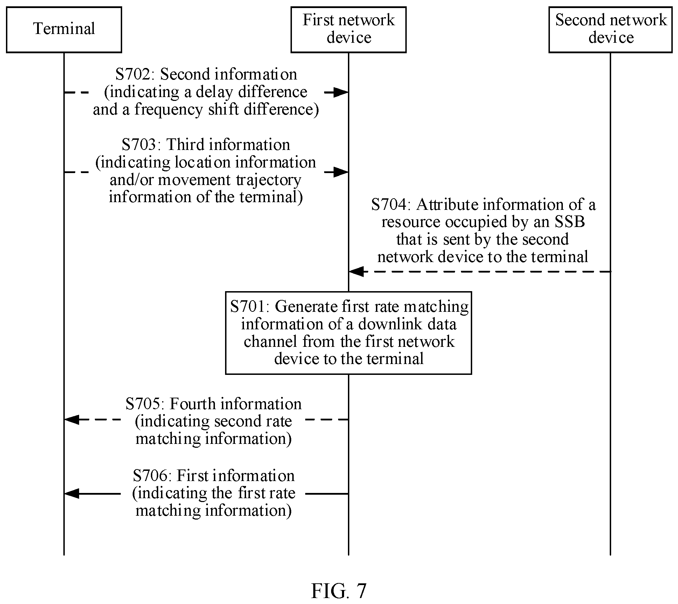

To better describe embodiments of this application, the following describes, with reference to the accompanying drawings, a communication method provided in embodiments of this application. FIG. 7 is a flowchart of a communication method according to an embodiment of this application. In the following description process, the method is applied to the network architecture shown in FIG. 3, and a specific application scenario is described as follows: An example in which two network devices (that is, the first network device and the second network device, for example, the first satellite and the second satellite shown in FIG. 6) provide services for a same terminal is used for description. A procedure of the method is described as follows:
S701: The first network device generates first rate matching information of a downlink data channel from the first network device to a terminal.

The first rate matching information indicates the first network device not to send a downlink signal to the terminal on a (time-frequency) resource occupied by an SSB that is sent by the second network device to the terminal. In this way, the first rate matching information may also be referred to as first resource reservation information, or may have another name. Optionally, the downlink data channel may be a PDSCH, or may be another downlink channel used for downlink data transmission. For example, assuming that the second network device sends an SSB to the terminal on a specific resource, the first rate matching information may indicate the first network device not to send, on the resource, downlink data to the terminal on a PSDCH. This avoids interference generated between downlink signals (that is, the SSB and the downlink data) when the first network device and the second network device serve the same terminal, thereby improving communication quality.

The first rate matching information may be determined by the first network device based on attribute information of the resource occupied by the SSB that is sent by the second network device to the terminal, a delay difference, and a frequency shift difference. The delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource. For example, the frequency offset difference may be a Doppler frequency offset difference or a Doppler frequency difference. In this way, the frequency shift difference may also be referred to as the Doppler frequency shift difference. Optionally, if the first network device and the second network device send a same downlink signal to the terminal on a same time-frequency (that is, a same frequency domain and a same time domain) resource, the delay difference and the frequency shift difference are respectively a time difference and a frequency offset difference between receiving, by the terminal, the downlink signal sent by the first network device and the downlink signal sent by the second network device on the time-frequency resource.

In an optional solution, the delay difference and the frequency shift difference may be determined and sent by the terminal. Optionally, this embodiment of this application may further include: S702: The terminal sends second information to the first network device. Correspondingly, the first network device receives the second information of the terminal, where the second information indicates the delay difference and the frequency shift difference. For example, S702 is performed before S701 (as shown in FIG. 7). For example, the terminal may measure an SSB sent by the first network device and the SSB sent by the second network device, to obtain the delay difference and the frequency shift difference based on an SSB measurement result, and further feed back the delay difference and the frequency shift difference to the first network device. The delay difference may be denoted as DeltaT, and the frequency shift difference may be denoted as DeltaF. In this manner, because the first network device may directly obtain the delay difference and the frequency shift difference from the terminal, in other words, the first network device may obtain the delay difference and the frequency shift difference without performing calculation or measurement by the first network device, computational complexity of generating the first rate matching information by the first network device is reduced.

In another optional solution, to reduce signaling overheads of the terminal, a process of determining the delay difference and the frequency shift difference may alternatively be performed by the first network device. Optionally, this embodiment of this application may further include: S703: The terminal sends third information to the first network device. Correspondingly, the first network device receives the third information of the terminal, where the third information indicates location information and/or movement trajectory information of the terminal. After obtaining the location information and/or the movement trajectory information of the terminal, the first network device may determine the delay difference and the frequency shift difference with reference to ephemeris information (to be specific, ephemeris information of the first network device and ephemeris information of the second network device) within specified duration. For the location information of the terminal, the specified duration may be the same as time information (that is, a time range or a moment) corresponding to the location information of the terminal, and for the movement trajectory information of the terminal, the specified duration may be the same as duration corresponding to the movement trajectory information of the terminal, that is, the specified duration may be a time range or a moment when the terminal is at a location indicated by the location information of the terminal, or the specified duration may be duration in which the terminal moves on a movement trajectory indicated by the movement trajectory information.

Because time at which the terminal is at the location indicated by the location information of the terminal may correspond to a time range (for example, denoted as [t1, tn], where t1 is start time at which the terminal is at the location indicated by the location information, and tn is time at which the terminal leaves the location indicated by the location information), instead of a specific moment, after obtaining the location information of the terminal, the first network device may determine, with reference to the ephemeris information of the first network device and the ephemeris information of the second network device, a delay difference list and a frequency shift difference list that are within the time range. The delay difference list may be denoted as DeltaTList, and the frequency shift difference may be denoted as DeltaFList. Similarly, after obtaining the movement trajectory information of the terminal, the first network device may determine, with reference to the ephemeris information of the first network device and the ephemeris information of the second network device, a delay difference list and a frequency shift difference list corresponding to duration during which the terminal moves on the movement trajectory indicated by the movement trajectory information. In this manner, when the terminal moves on the movement trajectory indicated by the movement trajectory information, the first network device may directly select, from the pre-obtained delay difference list and frequency shift difference list, a delay difference and a frequency shift difference that match a current location of the terminal, thereby increasing the speed of determining the delay difference and the frequency shift difference, and improving efficiency of generating the first rate matching information to some extent.

It should be noted that, for example, S703 is performed before S701 (as shown in FIG. 7), and S702 and S703 are two mutually exclusive alternative solutions. In this way, during specific implementation, one of the manners of determining the delay difference and the frequency shift difference may be used. For example, if reducing the signaling overheads of the terminal does not need to be considered, S702 may be selected; if reducing the signaling overheads of the terminal needs to be considered, S703 may be selected.

The attribute information of the resource occupied by the SSB that is sent by the second network device to the terminal may be determined and sent by the second network device. Optionally, this embodiment of this application may further include: S704: The second network device sends, to the first network device, the attribute information of the resource occupied by the SSB that is sent by the second network device to the terminal. Correspondingly, the first network device receives the attribute information of the resource occupied by the SSB that is sent by the second network device to the terminal. For example, S704 is performed before S701, and is performed after S702 or S703 (as shown in FIG. 7). However, it should be noted that there is no clear sequence between S704 and S702 or S703. That is, S704 may alternatively be performed before S702 or S703.

In addition, in order for the first network device to adequately avoid, based on the first rate matching information, mutual interference generated when the first network device sends the downlink signal and the second network device sends the SSB, optionally, the attribute information of the resource occupied by the SSB that is sent by the second network device to the terminal may include at least one of the following: an index of the SSB sent by the second network device to the terminal (namely, an SSB index), a period in which the second network device sends the SSB to the terminal (namely, an SSB period), a frequency domain start position and/or a frequency domain center position and/or a frequency domain end position of an RB on which the second network device sends the SSB to the terminal, and the like. Certainly, the attribute information of the resource occupied by the SSB that is sent by the second network device to the terminal may further include other information. This is not limited in this application.

Further, because there is a mapping relationship/correspondence between the index of the SSB sent by the second network device to the terminal and a time domain/time position for sending the SSB, the first network device may determine, based on the index of the SSB sent by the second network device to the terminal, the time domain/time position at which the second network device sends the SSB each time. The period in which the second network device sends the SSB to the terminal may be used to determine a time domain range occupied for sending the SSB by the second network device to the terminal, that is, a time interval between two adjacent times of sending the SSB by the second network device to the terminal. For example, the second network device sends an SSB to the terminal every 20 ms. The frequency domain start position and/or the frequency domain center position and/or the frequency domain end position of the RB on which the second network device sends the SSB to the terminal may be used to determine a specific frequency domain position occupied for sending the SSB by the second network device to the terminal. In this way, if the attribute information of the resource occupied by the SSB that is sent by the second network device to the terminal includes the foregoing three items of attribute information, resource occupation when the first network device performs rate matching for the downlink data channel may be reduced to some extent. That is, a quantity of reserved resources is reduced.

For example, it is assumed that the attribute information of the resource occupied by the SSB that is sent by the second network device to the terminal includes only the index of the SSB sent by the second network device to the terminal and the period in which the second network device sends the SSB to the terminal. In this case, when performing rate matching for the downlink data channel, the first network device needs to occupy at least all frequency domain resources, in a time domain range (for example, 20 ms) in which the second network device sends the SSB each time, that include the time domain/a specific time domain of the time position/time range (that is, a range of a time domain occupied by the SSB, for example, 5 ms) that is for sending the SSB and that corresponds to the index of the SSB, to ensure that the first network device can subsequently effectively avoid, based on the generated first rate matching information, the mutual interference generated when the first network device sends the downlink signal and the second network device sends the SSB. However, a large quantity of resources are occupied when the first network device transmits the downlink signal. In other words, a large quantity of resources are occupied when the first network device performs rate matching for the downlink data channel. Consequently, a communication capability (for example, a data transmission rate) of the first network device is reduced to some extent.

If the attribute information of the resource occupied by the SSB that is sent by the second network device to the terminal includes the foregoing three items of attribute information, on a premise that the first network device can effectively avoid, based on the generated first rate matching information, the mutual interference generated when the first network device sends the downlink signal and the second network device sends the SSB, occupation of a resource of the first network device caused by rate matching can be further reduced.

Optionally, the second network device may further send the SSB to the terminal based on the attribute information of the resource occupied by the SSB, so that the terminal can receive system information of the second network device.

In an optional implementation, that the first network device determines the first rate matching information with reference to specific conditions of the delay difference and the frequency shift difference may specifically include the following four manners:
Manner 1: The delay difference is less than or equal to a length of a CP, the frequency shift difference is less than a first threshold, and the first rate matching information may be second rate matching information. For example, the second rate matching information may be determined based on the attribute information of the resource occupied by the SSB that is sent by the second network device to the terminal. A measurement unit of the delay difference and the CP may be a quantity of data symbols (for example, OFDM symbols), that is, a quantity of data symbols, or may be a time unit, for example, microsecond (µs). A measurement unit of the frequency shift difference and the first threshold may be a quantity of subcarriers, that is, a quantity of subcarriers, or may be a frequency unit, for example, kilohertz (kHz). This is not limited in this embodiment of this application.

Optionally, the first threshold may be any frequency value indicating that the frequency shift difference is far less than a subcarrier spacing (subcarrier spacing, SCS). In this way, Manner 1 may also be understood as follows: If the delay difference is less than or equal to the length of the CP, and the frequency shift difference is far less than the SCS, the first network device may determine that the first rate matching information is information determined based on the attribute information of the resource occupied by the SSB that is sent by the second network device to the terminal. For example, that the delay difference is less than or equal to the length of the CP and the frequency shift difference is far less than the SCS may be specifically represented as: DeltaT≤CP, and DeltaF<<SCS. It is assumed that a condition for determining that the frequency shift difference is far less than the SCS is that the frequency shift difference is less than 1% of the SCS (that is, the first threshold). In this case, when the frequency shift difference is 0.005 subcarrier (that is, 0.5% of the SCS), it may be determined that the frequency shift difference (the 0.005 subcarrier) is far less than the SCS.

Manner 2: The delay difference is greater than the length of the CP, the frequency shift difference is less than the first threshold, and the first rate matching information is determined based on the second rate matching information and a first time domain offset.

The first time domain offset is related to the delay difference. That is, the first time domain offset is determined based on the delay difference. For example, the first time domain offset may be represented as TimeOffset. Optionally, the first time domain offset may be a result of rounding up the delay difference. For example, if the delay difference is 2.56 OFDM symbols, the first time domain offset is three OFDM symbols. In addition, the first time domain offset may alternatively be determined based on the delay difference and determined in another manner. In other words, in this embodiment of this application, a specific manner of determining the first time domain offset based on the delay difference is not limited.

Same as Manner 1, if the first threshold is still any frequency value indicating that the frequency shift difference is far less than the SCS, Manner 2 may also be understood as follows: If the delay difference is greater than the length of the CP, and the frequency shift difference is far less than the SCS, the first network device may determine the first rate matching information based on the second rate matching information and the first time domain offset. In other words, the first network device performs time-domain adjustment or modification on the second rate matching information based on the first time domain offset, to obtain the first rate matching information. For example, that the delay difference is greater than the length of the CP and the frequency shift difference is far less than the SCS may be specifically represented as: DeltaT>CP, and DeltaF<<SCS. It should be noted that that the first rate matching information is determined based on the second rate matching information and the first time domain offset may also be understood as follows: The first network device performs, based on the first time domain offset, time-domain offset on a resource indicated by the second rate matching information, to obtain a resource obtained by performing time-domain offset, and generate the first rate matching information. In other words, the first rate matching information indicates the resource obtained by performing time-domain offset on the resource indicated by the second rate matching information.

Manner 3: The delay difference is less than or equal to the length of the CP, the frequency shift difference is greater than a second threshold, and the first rate matching information is determined based on the second rate matching information and a first frequency domain offset.

The second threshold is greater than the foregoing first threshold. For example, the first threshold may be 1% of the SCS, and the second threshold may be 5.8% of the SCS. The first frequency domain offset is related to the frequency shift difference. That is, the first frequency domain offset is determined based on the frequency shift difference. For example, the first frequency domain offset may be represented as FreqOffset. Optionally, the first frequency domain offset may be a result of rounding up the frequency shift difference. For example, if the frequency shift difference is 2.12 subcarriers, the first frequency domain offset is three subcarriers. In addition, the first frequency domain offset may alternatively be determined based on the frequency shift difference and determined in another manner. In other words, in this embodiment of this application, a specific manner of determining the first frequency domain offset based on the frequency shift difference is not limited.

Optionally, the second threshold may be any frequency value indicating that the frequency shift difference is approximately equal to the SCS. In this way, Manner 3 may also be understood as follows: If the delay difference is less than or equal to the length of the CP, and the frequency shift difference is approximately equal to the SCS, the first network device may determine the first rate matching information based on the second rate matching information and the first frequency domain offset. In other words, the first network device performs frequency-domain adjustment or modification on the second rate matching information based on the first frequency domain offset, to obtain the first rate matching information. For example, that the delay difference is less than or equal to the length of the CP and the frequency shift difference is approximately equal to the SCS may be specifically represented as: DeltaT≤CP, and DeltaF≈SCS. Further, it is assumed that a condition for determining that the frequency shift difference is approximately equal to the SCS is that the frequency shift difference is not less than 99% of the SCS (that is, the second threshold). In this case, for example, when the frequency shift difference is 0.992 subcarrier (that is, 99.2% of the SCS), it may be determined that the frequency shift difference (the 0.992 subcarrier) is approximately equal to the SCS.

It should be noted that that the first rate matching information is determined based on the second rate matching information and the first time domain offset may also be understood as follows: The first network device performs, based on the first frequency domain offset, frequency-domain offset on a resource indicated by the second rate matching information, to obtain a resource obtained by performing frequency-domain offset, and generate the first rate matching information. In other words, the first rate matching information indicates the resource obtained by performing frequency-domain offset on the resource indicated by the second rate matching information.

Manner 4: The delay difference is greater than the length of the CP, the frequency shift difference is greater than the second threshold, and the first rate matching information is determined based on the second rate matching information, the first time domain offset, and the first frequency domain offset.

It is assumed that Manner 4 is the same as Manner 3. To be specific, if the second threshold is still any frequency value indicating that the frequency shift difference is approximately equal to the SCS, Manner 4 may also be understood as follows: If the delay difference is greater than the length of the CP, and the frequency shift difference is approximately equal to the SCS, the first network device may determine the first rate matching information based on the second rate matching information, the first time domain offset, and the first frequency domain offset. In other words, the first network device performs time-domain and frequency-domain adjustment or time-domain and frequency-domain modification on the second rate matching information based on the first time domain offset and the first frequency domain offset, to obtain the first rate matching information. For example, that the delay difference is greater than the length of the CP and the frequency shift difference is approximately equal to the SCS may be specifically represented as: DeltaT>CP, and DeltaF≈SCS. In addition, that the first rate matching information is determined based on the second rate matching information, the first time domain offset, and the first frequency domain offset may also be understood as follows: The first network device performs, based on the first time domain offset and the first frequency domain offset, time-domain offset and frequency-domain offset on a resource indicated by the second rate matching information, to obtain a resource obtained by performing time-domain offset and frequency-domain offset, and generate the first rate matching information. In other words, the first rate matching information indicates the resource obtained by performing time-domain offset and frequency-domain offset on the resource indicated by the second rate matching information.

S706: The first network device sends first information to the terminal. Correspondingly, the terminal receives the first information from the first network device.

Optionally, the first information indicates the first rate matching information of the downlink data channel (for example, the PDSCH) from the first network device to the terminal. That is, the first information indicates the first rate matching information generated by the first network device. In this way, the first information may also be referred to as indication information of the first rate matching information, or rate matching information of the downlink data channel, or may have another name.

Still refer to FIG. 7. In another embodiment, the first network device may further determine the second rate matching information in advance based on the attribute information, sent by the second network device in S704, of the resource occupied by the SSB that is sent by the second network device to the terminal (for example, UE), and then send, to the terminal in step S705, fourth information indicating the second rate matching information. Specifically, the fourth information may directly carry the second rate matching information, in other words, explicitly indicate the second rate matching information, or may implicitly indicate the second rate matching information in another manner. This is not limited in this application. In this manner, before receiving the first rate matching information indicated by the first information, the terminal may receive, based on the second rate matching information indicated by the fourth information, the downlink data sent by the first network device based on the second rate matching information, and the SSB from the second network device, to ensure good quality of communication between the terminal, the first network device, and the second network device.

As a location of the first network device and/or a location of the second network device and/or a location of the terminal dynamically change/changes, the delay difference and the frequency shift difference also dynamically change accordingly. In this way, the first network device may dynamically obtain an updated first time domain offset and/or an updated first frequency domain offset, and perform rate matching (or perform rate matching within specified duration) for the downlink data channel from the first network device to the terminal based on the updated first time domain offset and/or the updated first frequency domain offset, so that in relatively long duration, the mutual interference is not generated when the first network device sends the downlink data to the terminal and the second network device sends the SSB to the terminal. In addition, if the first network device notifies the terminal of the updated first time domain offset and/or the updated first frequency domain offset, it can also be ensured that the terminal accurately receives the downlink data sent by the first network device on the downlink data channel.

It may be understood that a manner of determining the first rate matching information based on the second rate matching information, the delay difference, and the frequency shift difference may also be considered as follows: The first network device determines, based on the specific conditions of the delay difference and the frequency shift difference, whether the second rate matching information needs to be adjusted or modified, or which manner is used to adjust or modify the second rate matching information, to determine the first rate matching information. In this case, the first rate matching information is the second rate matching information that is not adjusted or modified, or information obtained by adjusting or modifying the second rate matching information.

In another optional implementation, when generating the first rate matching information of the downlink data channel from the first network device to the terminal, the first network device may directly determine the first rate matching information based on the attribute information of the resource occupied by the SSB that is sent by the second network device to the terminal, the delay difference, and the frequency shift difference, so that operations such as determining the second rate matching information by the first network device, sending the second rate matching information to the terminal by the first network device, and adjusting or modifying the second rate matching information by the first network device are reduced, thereby reducing signaling overheads of the first network device, and reducing system resources needed for signaling transmission between the terminal and the first network device. Optionally, the first rate matching information directly determined by the first network device based on the attribute information of the resource occupied by the SSB that is sent by the second network device to the terminal, the delay difference, and the frequency shift difference may include at least one of the following: a start data symbol (for example, an OFDM symbol) and a quantity of data symbols (for example, a quantity of OFDM symbols), a start data RB and a quantity of data RBs, a period in which the second network device sends the SSB to the terminal (that is, an SSB period), and the like. Certainly, the first rate matching information may further include other information, and this is not limited in this application. The start data symbol and the quantity of data symbols may be represented as TimeStartandLength, and the start data RB and the quantity of data RBs may be represented as FreqStartandLength.

For example, the quantity of data symbols is a time-domain length of a resource indicated by the first rate matching information. For example, a specific value of the quantity of data symbols may be any value in {4, 5, 6, ...}, and the quantity of data RBs is a frequency-domain length of the resource indicated by the first rate matching information. For example, a specific value of the quantity of data symbols may be either value in {20, 21}.

For another example, a time domain/time position at which the second network device sends the SSB each time may be determined based on an index that is of the SSB sent by the second network device to the terminal and that is included in the attribute information of the resource occupied by the SSB that is sent by the second network device to the terminal, and a time domain range occupied for sending the SSB by the second network device to the terminal, that is, a time interval between two adjacent times of sending the SSB by the second network device to the terminal, may be determined based on the period in which the second network device sends the SSB to the terminal and that is included in the attribute information of the resource occupied by the SSB that is sent by the second network device to the terminal. In this case, the first network device may further determine the start data symbol, to be specific, a time domain start position of the resource indicated by the first rate matching information, based on the index of the SSB sent by the second network device to the terminal, the period in which the second network device sends the SSB to the terminal, and the delay difference. In addition, a specific frequency domain position occupied for sending the SSB by the second network device to the terminal may be determined based on the frequency domain start position and/or the frequency domain center position and/or the frequency domain end position of the RB on which the second network device sends the SSB to the terminal. In this case, the first network device may determine the start data RB, to be specific, a frequency domain start position of the resource indicated by the first rate matching information, based on the frequency shift difference and the frequency domain start position and/or the frequency domain center position and/or the frequency domain end position of the RB on which the second network device sends the SSB to the terminal.

It should be noted that, in this embodiment of this application, a manner of selecting the specific value of the quantity of data symbols, a manner of selecting a specific value of the quantity of data RBs, and the like are not specifically limited; and a manner of determining, by the first network device, the start data symbol based on the index of the SSB sent by the second network device to the terminal, the period in which the second network device sends the SSB to the terminal, and the delay difference, a manner of determining the start data RB based on the frequency domain start position and/or the frequency domain center position and/or the frequency domain end position of the RB on which the second network device sends the SSB to the terminal and the frequency shift difference, and the like are not specifically limited. For example, if the first network device learns of, in advance, a correspondence between the index of the SSB, and the quantity of data symbols and the quantity of data RBs, after obtaining the index of the SSB sent by the second network device to the terminal, the first network device may determine the quantity of data symbols and the quantity of data RBs with reference to the correspondence. Optionally, if there is also a correspondence between the period in which the second network device sends the SSB to the terminal, and the quantity of data symbols and the quantity of data RBs, after obtaining the period in which the second network device sends the SSB to the terminal, the first network device may also determine the quantity of data symbols and the quantity of data RBs based on the correspondence.

Similarly, although the delay difference and the frequency shift difference dynamically change with the location of the first network device and/or the location of the second network device and/or the location of the terminal, based on the foregoing manner of directly generating the first rate matching information, the first network device may dynamically update the start data symbol and the quantity of data symbols, and/or the start data RB and the quantity of data RBs, and perform rate matching for the downlink data channel from the first network device to the terminal based on an updated start data symbol and an updated quantity of data symbols, and/or an updated start data RB and an updated quantity of data RBs, so that in relatively long duration, the mutual interference is not generated when the first network device sends the downlink data to the terminal and the second network device sends the SSB to the terminal. In addition, if the first network device notifies the terminal of the updated start data symbol and the updated quantity of data symbols, and/or the updated start data RB and the updated quantity of data RBs, it can also be ensured that the terminal accurately receives the downlink data sent by the first network device on the downlink data channel.

In addition, when determining the first rate matching information of the downlink data channel from the first network device to the terminal, if the first network device determines the second rate matching information in advance based on the attribute information of the resource occupied by the SSB that is sent by the second network device to the terminal, and sends the second rate matching information to the terminal (that is, sends, to the terminal, the fourth information indicating the second rate matching information), S704 and S705 are performed. In this case, the first information in step S701 may further indicate to modify the second rate matching information based on the first rate matching information. In this case, the terminal may modify the second rate matching information based on the first rate matching information, to ensure that the terminal can accurately receive, based on modified second rate matching information (that is, the first rate matching information), the downlink data sent by the first network device on the downlink data channel.

It may be understood that, to reduce overheads caused by signaling transmission between the terminal and the first network device, after sending, to the terminal, the fourth information indicating the second rate matching information, the first network device may send only information for adjusting or modifying the second rate matching information to the terminal. That is, the first rate matching information does not need to be completely sent to the terminal. For example, because the first network device may determine, based on the delay difference and the frequency shift difference, whether to adjust or modify the second rate matching information, the first information sent by the first network device to the terminal may only indicate that: The second rate matching information does not need to be adjusted or modified; or the second rate matching information is adjusted or modified based on the first time domain offset that is determined based on the delay difference; or the second rate matching information is adjusted or modified based on the first frequency domain offset that is determined based on the frequency shift difference; or the second rate matching information is adjusted or modified based on the first time domain offset that is determined based on the delay difference, and the first frequency domain offset that is determined based on the frequency shift difference; or the like.

It can be learned that, based on the communication method in steps S701 to S706, in this embodiment of this application, when the first network device generates the first rate matching information of the downlink data channel from the first network device to the terminal, information like the attribute information of the resource occupied by the SSB that is sent by the second network device to the terminal, the time difference (that is, the delay difference) between receiving, by the terminal, the downlink signals sent by the first network device and the second network device on the same time domain resource, and the frequency offset difference (that is, the frequency offset difference) between receiving, by the terminal, the downlink signals sent by the first network device and the second network device on the same frequency domain resource are considered. Therefore, the first network device can effectively avoid sending the downlink data to the terminal on the downlink data channel (for example, the PDSCH) when the second network device sends the SSB to the terminal, thereby mitigating the mutual interference generated when different network devices send the SSB and the downlink data, and improving the communication quality. In addition, because the first network device sends, to the terminal, the first information indicating the first rate matching information, the terminal can accurately receive, based on the first rate matching information, the downlink data sent by the first network device on the downlink data channel.

In addition, in comparison with an existing manner in which a rate matching pattern or a bitmap (bitmap) is configured by using RRC, the first rate matching information in this embodiment of this application does not need to indicate rate matching conditions of all data RBs, data symbols, and slots on a resource corresponding to the downlink data channel, and only needs to indicate that there is a resource for rate matching. Therefore, signaling overheads are also reduced to some extent.

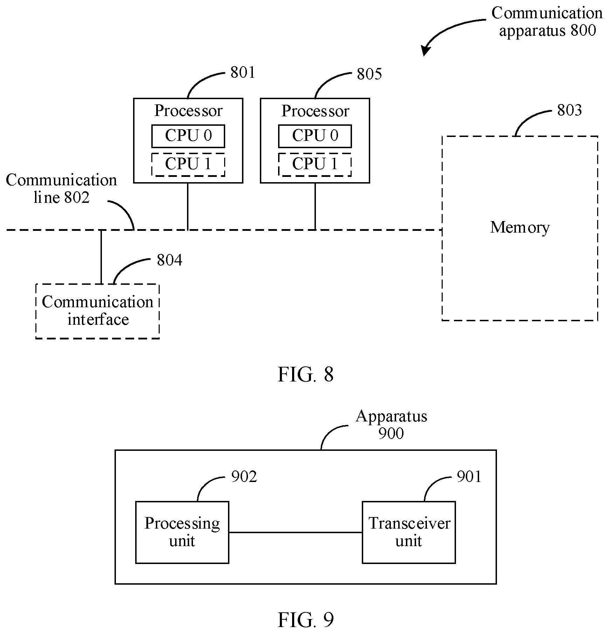

FIG. 8 is a diagram of a structure of a communication apparatus according to an embodiment of this application. The communication apparatus 800 may be a system architecture of the first network device in the embodiment shown in FIG. 7, and is configured to implement the method corresponding to the first network device in the foregoing method embodiment. Alternatively, the communication apparatus 800 may be a system architecture of the terminal in the embodiment shown in FIG. 7, and is configured to implement the method corresponding to the terminal in the foregoing method embodiment. Alternatively, the communication apparatus 800 may be a system architecture of the second network device in the embodiment shown in FIG. 7, and is configured to implement the method corresponding to the second network device in the foregoing method embodiment.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 800 may include one or more memories 803, configured to store instructions. The memory 803 may further store data. The processor 800 and the memory 801 may be separately disposed, or may be integrated together. The communication apparatus 800 further includes a communication line 802 and at least one communication interface 804. The memory 803, the communication line 802, and the communication interface 804 are all optional, and therefore are all represented by dashed lines in FIG. 8.

Optionally, the communication apparatus 800 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 800 by using the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 801 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 802 may include a path on which information is transferred between the foregoing components.

The communication interface 804 may be an apparatus such as a transceiver, and is configured to communicate with another device or a communication network, for example, an Ethernet, a radio access network (radio access network, RAN), a wireless local area network (wireless local area network, WLAN), or a wired access network.

The memory 803 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Bluray disc, or the like), a magnetic disk storage medium or another magnetic storage device, or any other medium that can carry or store expected program code in a form of instructions or a data structure and that can be accessed by a computer. This is not limited thereto. The memory 803 may exist independently, and is connected to the processor 801 through the communication line 802. Alternatively, the memory 803 may be integrated with the processor 801.

The memory 803 is configured to store computer-executable instructions for executing the solutions of this application, and the processor 801 controls execution. The processor 801 is configured to execute the computer-executable instructions stored in the memory 803, to implement the steps performed by the first network device, the terminal, or the second network device in the embodiment shown in FIG. 7.

Optionally, the computer-executable instructions in this embodiment of this application may also be referred to as application program code. This is not specifically limited in this embodiment of this application.

During specific implementation, in an embodiment, the processor 801 may include one or more CPUs, for example, a CPU 0 and a CPU 1 shown in FIG. 8.

During specific implementation, in an embodiment, the communication apparatus 800 may include a plurality of processors, for example, the processor 801 and a processor 805 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 8 is a chip, for example, a chip of the first network device, a chip of the terminal, or a chip of the second network device, the chip includes the processor 801 (and may further include the processor 805), the communication line 802, and the communication interface 804. Optionally, the chip may include the memory 803. Specifically, the communication interface 804 may be an input interface, a pin, a circuit, or the like. The memory 803 may be a register, a buffer, or the like. The processor 801 and the processor 805 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 9 is a diagram of an apparatus. The apparatus 900 may be the first network device, the terminal, or the second network device in the foregoing method embodiments, or may be a chip in the first network device, a chip in the terminal, or a chip in the second network device. The apparatus 900 includes a processing unit 902 and a transceiver unit 901.

It should be understood that the apparatus 900 may be configured to implement the steps performed by the first network device, the terminal, or the second network device in the communication method in embodiments of this application. For related features, refer to the embodiment shown in FIG. 7. Details are not described herein again.

Optionally, functions/implementation processes of the transceiver unit 901 and the processing unit 902 in FIG. 9 may be implemented by the processor 801 in FIG. 8 by invoking the computer-executable instructions stored in the memory 803. Alternatively, the function/implementation process of the processing unit 902 in FIG. 9 may be implemented by the processor 801 in FIG. 8 by invoking the computer-executable instructions stored in the memory 803, and the function/implementation process of the transceiver unit 901 in FIG. 9 may be implemented by the communication interface 804 in FIG. 8.

When the apparatus 900 is a chip or a circuit, the function/implementation process of the transceiver unit 901 may alternatively be implemented by a pin, a circuit, or the like. Optionally, the transceiver unit 901 may include a sending unit and/or a receiving unit. The sending unit is configured to implement a sending function, and the receiving unit is configured to implement a receiving function. Alternatively, the transceiver unit 901 may be an integral module that can implement the sending function and/or the receiving function. Optionally, the transceiver unit 901 may be implemented by a transceiver.

This application further provides a computer-readable storage medium. The computer-readable storage medium stores a computer program or instructions. When the computer program or the instructions are run, the method performed by the first network device, the terminal, or the second network device in the foregoing method embodiments is implemented. In this way, the functions in the foregoing embodiments may be implemented in a form of a software functional unit and sold or used as an independent product. Based on such an understanding, the technical solutions of this application essentially, or the contributing part, or some of the technical solutions may be implemented in a form of a software product. The computer software product is stored in a storage medium, and includes several instructions for instructing a computer device (which may be a personal computer, a server, a network device, or the like) to perform all or some of the steps of the communication methods described in embodiments of this application. The storage medium includes any medium that can store program code, such as a USB flash drive, a removable hard disk drive, a ROM, a RAM, a magnetic disk, or an optical disc.

This application further provides a computer program product. The computer program product includes computer program code. When the computer program code is run on a computer, the computer is caused to perform the method performed by the first network device, the terminal, or the second network device in any one of the foregoing method embodiments.

An embodiment of this application further provides a processing apparatus, including a processor and an interface. The processor is configured to perform the method performed by the first network device, the terminal, or the second network device in any one of the foregoing method embodiments.

This application further provides a communication system. The communication system may be configured to implement the method performed by the first network device, the terminal, or the second network device in any one of the foregoing method embodiments or the possible implementations of the foregoing method embodiments. For example, the communication system has the architecture shown in FIG. 3.

This application further provides a chip or a chip system. The chip is coupled to a transceiver, and is configured to implement the method performed by the first network device, the terminal, or the second network device in any one of the foregoing method embodiments or the possible implementations of the foregoing method embodiments. "Coupling" means that two components are directly or indirectly connected to each other. This connection may be fixed or movable, and may allow a fluid, electricity, an electrical signal, or another type of signal to communicate between the two components. The chip system may include the chip. Specifically, the chip or the chip system may be configured to perform the method performed by the first network device, the terminal, or the second network device in any one of the foregoing method embodiments.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor so that the processor may read information from the storage medium and write information to the storage medium. Optionally, the storage medium may be integrated into a processor. The processor and the storage medium may be arranged in the ASIC, and the ASIC may be arranged in a terminal. Optionally, the processor and the storage medium may also be arranged in different components of the terminal.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or a logic conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the first network device and/or the terminal and/or the second network device may perform some or all of the steps in embodiments of this application. These steps or operations are merely examples. In embodiments of this application, other operations or variations of various operations may be further performed. In addition, the steps may be performed in a sequence different from that presented in embodiments of this application, and not all of the operations in embodiments of this application may be necessarily performed.

## Claims

1. A communication method, applied to a first network device, and comprising:
generating first rate matching information of a downlink data channel from the first network device to a terminal, wherein the first rate matching information is determined based on attribute information of a resource occupied by a synchronization signal block SSB that is sent by a second network device to the terminal, a delay difference, and a frequency shift difference, the delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource; and
sending first information to the terminal, wherein the first information indicates the first rate matching information.

2. The method according to claim 1, wherein the method further comprises:
receiving second information of the terminal, wherein the second information indicates the delay difference and the frequency shift difference.

3. The method according to claim 1, wherein the method further comprises:
receiving third information of the terminal, wherein the third information indicates location information and/or movement trajectory information of the terminal, wherein
the delay difference and the frequency shift difference are determined based on the location information and/or the movement trajectory information of the terminal and ephemeris information within specified duration.

4. The method according to any one of claims 1 to 3, wherein the delay difference is less than or equal to a length of a cyclic prefix CP, the frequency shift difference is less than a first threshold, the first rate matching information is second rate matching information, and the second rate matching information is determined based on the attribute information of the resource occupied by the SSB that is sent by the second network device to the terminal;
the delay difference is greater than the length of the CP, the frequency shift difference is less than the first threshold, the first rate matching information is determined based on the second rate matching information and a first time domain offset, and the first time domain offset is related to the delay difference;
the delay difference is less than or equal to the length of the CP, the frequency shift difference is greater than a second threshold, the first rate matching information is determined based on the second rate matching information and a first frequency domain offset, the first frequency domain offset is related to the frequency shift difference, and the second threshold is greater than the first threshold; or
the delay difference is greater than the length of the CP, the frequency shift difference is greater than the second threshold, and the first rate matching information is determined based on the second rate matching information, the first time domain offset, and the first frequency domain offset.

5. The method according to any one of claims 1 to 4, wherein the method further comprises:
sending fourth information to the terminal, wherein the fourth information indicates the second rate matching information, and the second rate matching information is determined based on the attribute information of the resource occupied by the SSB that is sent by the second network device to the terminal, wherein
the first information further indicates to modify the second rate matching information based on the first rate matching information.

6. The method according to any one of claims 1 to 5, wherein the first rate matching information comprises at least one of the following:
a start data symbol and a quantity of data symbols;
a start data resource block RB and a quantity of data RBs; and
a period in which the second network device sends the SSB to the terminal.

7. The method according to any one of claims 1 to 6, wherein the attribute information of the resource occupied by the SSB that is sent by the second network device to the terminal comprises at least one of the following:
an index of the SSB sent by the second network device to the terminal;
the period in which the second network device sends the SSB to the terminal; and
a frequency domain start position and/or a frequency domain center position and/or a frequency domain end position of an RB on which the second network device sends the SSB to the terminal.

8. A communication method, applied to a terminal, comprising:
receiving first information from a first network device, wherein the first information indicates first rate matching information of a downlink data channel from the first network device to the terminal, the first rate matching information is determined based on attribute information of a resource occupied by a synchronization signal block SSB that is sent by a second network device to the terminal, a delay difference, and a frequency shift difference, the delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource; and
receiving, based on the first rate matching information, downlink data sent by the first network device on the downlink data channel.

9. The method according to claim 8, wherein the method further comprises:
sending second information to the first network device, wherein the second information indicates the delay difference and the frequency shift difference.

10. The method according to claim 8, wherein the method further comprises:
sending third information to the first network device, wherein the third information indicates location information and/or movement trajectory information of the terminal, wherein
the delay difference and the frequency shift difference are determined based on the location information and/or the movement trajectory information of the terminal and ephemeris information within specified duration.

11. The method according to any one of claims 8 to 10, wherein
the delay difference is less than or equal to a length of a cyclic prefix CP, the frequency shift difference is less than a first threshold, the first rate matching information is second rate matching information, and the second rate matching information is determined based on the attribute information of the resource occupied by the SSB that is sent by the second network device to the terminal;
the delay difference is greater than the length of the CP, the frequency shift difference is less than the first threshold, the first rate matching information is determined based on the second rate matching information and a first time domain offset, and the first time domain offset is related to the delay difference;
the delay difference is less than or equal to the length of the CP, the frequency shift difference is greater than a second threshold, the first rate matching information is determined based on the second rate matching information and a first frequency domain offset, the first frequency domain offset is related to the frequency shift difference, and the second threshold is greater than the first threshold; or
the delay difference is greater than the length of the CP, the frequency shift difference is greater than the second threshold, and the first rate matching information is determined based on the second rate matching information, the first time domain offset, and the first frequency domain offset.

12. The method according to any one of claims 8 to 11, wherein the method further comprises:
receiving fourth information of the first network device, wherein the fourth information indicates the second rate matching information, and the second rate matching information is determined based on the attribute information of the resource occupied by the SSB that is sent by the second network device to the terminal, wherein
the first information further indicates to modify the second rate matching information based on the first rate matching information when the second rate matching information is modified based on the first rate matching information.

13. The method according to any one of claims 8 to 12, wherein the first rate matching information comprises at least one of the following:
a start data symbol and a quantity of data symbols;
a start data resource block RB and a quantity of data RBs; and
a period in which the second network device sends the SSB to the terminal.

14. The method according to any one of claims 8 to 13, wherein the attribute information of the resource occupied by the SSB that is sent by the second network device to the terminal comprises at least one of the following:
an index of the SSB sent by the second network device to the terminal;
the period in which the second network device sends the SSB to the terminal; and
a frequency domain start position and/or a frequency domain center position and/or a frequency domain end position of an RB on which the second network device sends the SSB to the terminal.

15. A communication method, applied to a second network device, comprising:
sending, to a first network device, attribute information of a resource occupied by a synchronization signal block SSB that is sent by the second network device to a terminal, to cause the first network device to send first information to the terminal, wherein the first information indicates first rate matching information of a downlink data channel from the first network device to the terminal, the first rate matching information is determined based on the attribute information in combination with a delay difference and a frequency shift difference, the delay difference is a time difference between receiving, by the terminal, downlink signals sent by the first network device and the second network device on a same time domain resource, and the frequency shift difference is a frequency offset difference between receiving, by the terminal, downlink signals sent by the first network device and the second network device on a same frequency domain resource; and
sending the SSB to the terminal based on the attribute information of the resource occupied by the SSB.

16. The method according to claim 15, wherein
the delay difference is less than or equal to a length of a cyclic prefix CP, the frequency shift difference is less than a first threshold, the first rate matching information is second rate matching information, and the second rate matching information is determined based on the attribute information of the resource occupied by the SSB that is sent by the second network device to the terminal;
the delay difference is greater than the length of the CP, the frequency shift difference is less than the first threshold, the first rate matching information is determined based on the second rate matching information and a first time domain offset, and the first time domain offset is related to the delay difference;
the delay difference is less than or equal to the length of the CP, the frequency shift difference is greater than a second threshold, the first rate matching information is determined based on the second rate matching information and a first frequency domain offset, the first frequency domain offset is related to the frequency shift difference, and the second threshold is greater than the first threshold; or
the delay difference is greater than the length of the CP, the frequency shift difference is greater than the second threshold, and the first rate matching information is determined based on the second rate matching information, the first time domain offset, and the first frequency domain offset.

17. The method according to claim 15 or 16, wherein the first rate matching information comprises at least one of the following:
a start data symbol and a quantity of data symbols;
a start data resource block RB and a quantity of data RBs; and
a period in which the second network device sends the SSB to the terminal.

18. The method according to any one of claims 15 to 17, wherein the attribute information of the resource occupied by the SSB that is sent by the second network device to the terminal comprises at least one of the following:
an index of the SSB sent by the second network device to the terminal;
the period in which the second network device sends the SSB to the terminal; and
a frequency domain start position and/or a frequency domain center position and/or a frequency domain end position of an RB on which the second network device sends the SSB to the terminal.

19. A communication apparatus, wherein the communication apparatus comprises a processing unit and a transceiver unit, wherein
the transceiver unit is configured to receive and send information; and
the processing unit is configured to perform the method according to any one of claims 1 to 7 by using the transceiver unit.

20. A communication apparatus, wherein the communication apparatus comprises a processing unit and a transceiver unit, wherein
the transceiver unit is configured to receive and send information; and
the processing unit is configured to perform the method according to any one of claims 8 to 14 by using the transceiver unit.

21. A communication apparatus, wherein the communication apparatus comprises a processing unit and a transceiver unit, wherein
the transceiver unit is configured to receive and send information; and
the processing unit is configured to perform the method according to any one of claims 15 to 18 by using the transceiver unit.

22. A communication apparatus, wherein the communication apparatus comprises a processor and a memory, the memory stores a computer program, and the processor is configured to execute the computer program stored in the memory, to cause the communication apparatus to perform the method according to any one of claims 1 to 7, or the method according to any one of claims 8 to 14, or the method according to any one of claims 15 to 18.

23. A computer-readable storage medium, wherein the computer-readable storage medium stores a computer program, and when the computer program is run on a computer, the computer is caused to perform the method according to any one of claims 1 to 7, or the method according to any one of claims 8 to 14, or the method according to any one of claims 15 to 18.

24. A chip system, comprising a processor and an interface, wherein the processor is configured to receive instructions from the interface and run the instructions, and when the processor runs the instructions, the method according to any one of claims 1 to 7 is implemented, or the method according to any one of claims 8 to 14 is implemented, or the method according to any one of claims 15 to 18 is implemented.

25. A communication system, comprising a first network device, a terminal, and a second network device, wherein
the first network device is configured to perform the method according to any one of claims 1 to 7, the terminal is configured to perform the method according to any one of claims 8 to 14, and the second network device is configured to perform the method according to any one of claims 15 to 18.
